# EUROPEAN PATENT SPECIFICATION

(11) **EP 3 312 563 B1**
(45) Date of publication and mention of the grant of the patent: **30.11.2022**
(21) Application number: 17186158.6
(22) Date of filing: 06.12.2010
(51) Int. Cl.: G01C 23/00, G09B 9/08

(54) **DIGITAL RECORDING AND REPLAY SYSTEM FOR AN AIRCRAFT AND METHOD FOR REPRODUCTION OF ONBOARD INSTRUMENTATION OF AN AIRCRAFT**
DIGITALES AUFZEICHNUNGS- UND WIEDERGABESYSTEM FÜR EIN FLUGZEUG UND VERFAHREN ZUR DARSTELLUNG VON BORDINSTRUMENTEN EINES FLUGZEUGES
SYSTÈME NUMÉRIQUE D'ENREGISTREMENT ET DE LECTURE NUMÉRIQUE POUR REPRODUCTION DES INSTRUMENTS DE BORD D'UN AVION

(30) Priority: 04.12.2009 WO PCT/EP2009/066449
(43) Date of publication of application: 25.04.2018
(62) Divisional of application: 10790394.0
(73) Proprietor: PILATUS FLUGZEUGWERKE AG, 6370 Stans (CH)
(72) Inventor: O'Connor, Daniel, 6370 Stans (CH); Cervia, Bruno, 6374 Buochs (CH); Milns, Robert, 6374 Buochs (CH); Gibson, Paul, 6053 Alpnachstad (CH)
(74) Representative: Linhart, Friedrich Karl Eberhard

(56) References cited:
- US-A- 4 258 421
- US-A- 4 604 711
- US-A- 5 467 274
- US-A1- 2006 240 389

## Description

### PRIORITY

The present application claims priority from PCT/EP2009/066449 filed 04.12.2009.

### FIELD OF THE INVENTION

The present invention relates to a Digital recording and replay system for an aircraft and to a method for reproduction of onboard instrumentation of an aircraft.

### BACKGROUND OF THE INVENTION

Quite often there is a need to be able to replay/ reproduce the exact instrumentation presented to the pilots of an aircraft after a flight. Furthermore, one needs to be able to present this instrumentation in the context of the particular scenario and also to be able to reconstruct the pilot's reaction to the events occurred during the flight. In addition the reaction of an airplane in response to the pilot's actions needs to be documented.

Several systems are known which are able to record aircraft parameters and store instrumentation data as a video and/or audio recording. These systems are known as flight data recorders and cockpit voice/image recorders. They are usually placed in an aircraft for the purpose of facilitating the investigation of an aircraft accident or incident. In newer aircrafts installation of cockpit image recorders has been proposed to provide a video recording of the instruments within the cockpit. Such systems typically consist of a camera and microphone located in the cockpit to continuously record cockpit instrumentation, the outside viewing area, engine sounds, radio communications, and ambient cockpit sounds. After an accident or incident, the flight data recorders and cockpit voice/ image recorders are retrieved and a video and/or audio recording made during the flight is reconstructed along with recorded flight parameters. US 4 604 711 A gives an example of the existing systems.

However, known systems suffer from the major drawback that since they record aircraft parameters and an audio and/or video feed they can't reliably reproduce the instruments exactly as shown to the pilot. This is due to the fact that the video images recorded might be blurred, the camera view might be blocked, etc. or generally of low quality. Furthermore, due to the high storage capacity requirements for a video recording covering all instruments, either the length of such a recording is limited, or some of the instruments are not covered by the video recording.

Furthermore, the reconstruction of the onboard instrumentation based on a video recording is a very time-consuming procedure prone to errors.

In an attempt to overcome these disadvantages, an other kind of known system records merely aircraft parameters on the bases of which such onboard instruments are constructed. These instruments are then to be reconstructed based on the recorded parameters. However, relying merely on the set of recorded parameters does not necessarily allow a faithful reconstruction of the onboard instrumentation. One cause for this is the malfunction of the avionics systems of the aircraft.

A special field where such a reconstruction of onboard reconstruction is frequently performed is in the field of training aircrafts where the exact training environment is reconstructed for debrief and training analysis purposes. This field of application poses special requirements on such recording and replay systems, such as their ability to allow a quick and reliable reconstruction of the training environment including onboard instrumentation but also of visual and audible alerts received through different channels of onboard avionics systems. Furthermore, such systems must be able to be reused numerous times and their processing should be as straight-forward as possible.

Such training aircrafts are provided with a so-called mission computer as well with an operational flight program defining the training scenario performed by the pilot/ trainee. Therefore, the recorded instrument data needs to be recorded in relation with this scenario since the onboard instruments are always in relation with the operational flight program and only make sense in this context.

### OBJECTIVE OF THE INVENTION

The objective of the present invention is thus to provide a recording and replay system for an aircraft that is able to reliably reconstruct the onboard instruments of an aircraft, preferably a training aircraft, comprising a mission computer with an operational flight program. A further objective of the invention is to ensure that the onboard instrumentation is easy to reconstruct and can store instrument data covering a prolonged period of time.

Furthermore it is an objective of the present invention to provide a method for reproduction of onboard instrumentation of an aircraft able to reliably reconstruct the onboard instruments of an aircraft, preferably a training aircraft. Said method should allow quick reconstruction of onboard instruments of an aircraft brought in relation with an operational flight program of a mission computer of the aircraft.

### SUMMARY OF THE INVENTION

The above-identified objectives of the present invention are solved by a recording and replay system for an aircraft, comprising a mission computer with an operational flight program for generating instrument data for onboard instruments of the aircraft; a mission data recorder connected to said mission computer for recording said instrument data as processed by mission computer with an operational flight program; and a mission debriefing system; wherein the mission debriefing system is configured to reproduce the onboard instruments of the aircraft based on instrument data retrieved from the mission data recorder.

The above-identified objectives of the present invention are also solved by a method for reproduction of onboard instrumentation of an aircraft, comprising the steps of: connecting a mission data recorder to a mission computer of an aircraft having an operational flight program for generating instrument data for onboard instruments of the aircraft; recording instrument data as processed by mission computer with an operational flight program and sent to the onboard instruments of the aircraft using said mission data recorder; providing a mission debrief system; and causing said mission debrief system to reproduce the onboard instruments of the aircraft based on instrument data retrieved from the mission data recorder.

The objectives identified above are solved by the present invention in that instrument data for the onboard instruments of the aircraft, are recorded by the mission data recorder instead of aircraft parameters or video recording of the actual instruments. In other words the system records aircraft parameters where the signals have been processed through digital systems for accuracy and latency and relevance to the operator of the aircraft. The instruments of the aircraft can then be reconstructed based on the recorded parameters. Relying on the set of recorded parameters gives a faithful reconstruction of the activities onboard instrumentation central to the operations of the aircraft, including an accurate representation of malfunctions. One cause for this is the malfunction of the avionics systems of the aircraft which lies at the heart of the computing systems used to process the data.

The concept of debrief reconstruction uses recorded parameters of the avionics systems to reconstruct the onboard instruments as the pilot/operator would see them during flight, without the use of video systems.

This concept allows all pilot debrief to take place using the reconstructed instrumentation data, rather than basing debrief on recorded video. The additional onboard instruments available due to the recording method are an additional training aid provided for very little overhead compared to recording the additional 20-30 video streams that would traditionally be required under such a debriefing system. The digital signal processing of incoming source signals such as barometric altitude, airspeed or body lateral acceleration is carried out to present the data to the operator, and this can be re-used by the recording system to maximize efficiency.

### ADVANTAGEOUS EFFECTS

In view of the drawbacks of the prior art, the objective of the present invention and the inventive solution summarized above, the present invention has the main advantage that the data recorded reliably reflects the onboard instrumentation as used by the operator, as opposed to known systems recording merely aircraft parameters that are supposed to result in some expected instrumentation display, while at the same time simplifying the retrieval and minimizing the storage requirements, as compared to a recording of a video image of the instruments which is susceptible to errors in reconstruction, requires significantly more storage capacity and might not even cover all onboard instruments.

### BRIEF DESCRIPTION OF THE DRAWINGS

Further characteristics and advantages of the invention will in the following be described in detail by means of the description and by making reference to the drawings. Which show:
- Fig. 1: A schematic block diagram of the first embodiment of the recording and replay system according to the present invention;
- Fig. 2A: A schematic block diagram of the mission computer of an aircraft as being connected to a mission data recorder according to the present invention;
- Fig. 2B: A schematic block diagram depicting the integration of the mission data recorder of the present invention with the avionics system of an aircraft.

### DESCRIPTION OF PREFERRED EMBODIMENTS

Certain terms will be used in this patent application, the formulation of which should not be interpreted to be limited by the specific term chosen, but as to relate to the general concept behind the specific term.

In the context of the present application, training functionality shall mean the functionalities of a training aircraft which relate to the training of a pilot/ trainee in an emulated environment within the aircraft. The training functionalities further relate to tactical scenarios, simulated warfare, all these according to a training syllabus.

The term aircraft shall mean in the context of the present application any kind of aircraft including recreational, civil but especially training aircrafts providing tactical/ training functionalities.

### Hardware architecture

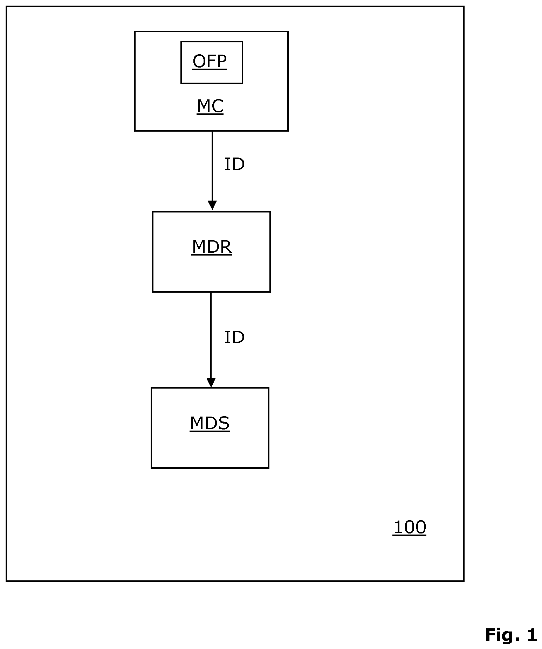

Fig. 1 shows a schematic block diagram of the first embodiment of the recording and replay system according to the present invention. This figure depicts the essential concept of the invention, i.e. the interaction between the mission computer MC, the mission data recorder MDR and the mission debriefing system MDS.

The mission computer MC is a central part of the avionics system of a training aircraft and comprises the operational flight program OFP, a dataset defining the training scenario and/or mission of the aircraft, wherein the operational flight program OFP takes as input unprocessed data, applies digital signal processing techniques for presentation to the operator and generates instrument data ID for onboard instruments of the aircraft. The mission computer MC carries out digital signal processing of incoming source signals from a number of sources such as air data computers, radar altimeters and inertial reference systems that supply raw data transposed from the original analogue signal measurement. To ensure that the data is supplied to the pilot/operator in a manner that is usable, the information is sampled and filtered to show a relatively stable value whilst reflecting the current trends in the aircraft parameters. Once this processing is carried out by the operational flight program OFP within the mission computer MC, the processed instrument data ID can be presented to the operator, and this can be re-used by the mission data recorder MDR to maximize efficiency in re-presenting this data in ground based debrief systems.

The mission data recorder MDR, a data recording and recovery device is connected to the mission computer MC, is provided for recording the instrument data ID generated by the operational flight program OFP. The role of the mission data recorder MDR is to record instrument data ID to allow post flight mission analysis and debrief - to support the training of aircrew in the aircraft.

It shall be noted that the mission data recorder MDR is not a replacement or alternative for an accident or flight data recorder.

The mission debriefing system MDS is a data recovery and instrumentation reconstruction system, configured to reproduce the onboard instruments of the aircraft based on instrument data ID retrieved from the mission data recorder MDR.

### Mission computer

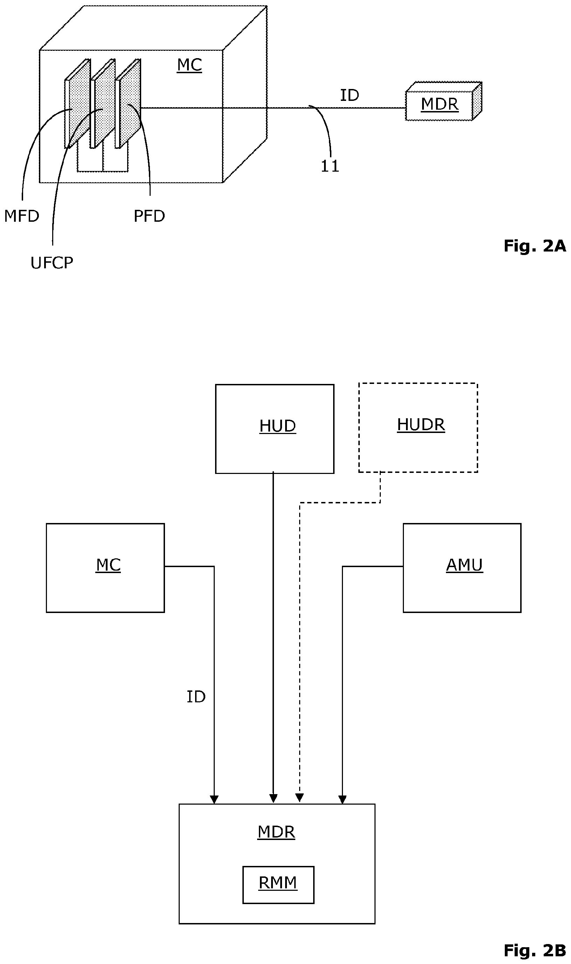

Fig.2A shows schematic block diagram of the mission computer MC of an aircraft as being connected to a mission data recorder MDR. The connection is preferably established via a mission bus 11. In a preferred embodiment of the present invention, the mission bus 11 is used to download new operational flight program OFP files into the mission computer MC; download mission files; download digital map tiles; and to upload instrument data ID for recording by the mission data recorder MDR.. The mission computer MC initiates all transfers on the mission bus 11. The mission computer MC mounts the removable memory module RMM of the mission data recorder MDR as a remote disk drive in order to download mission files and/or to retrieve digital map tiles. Means for receiving said removable memory module RMM are provided within the mission data recorder MDR, such as a memory card slot or suitable connectors.

The mission computer MC also controls the instrument data ID at the instruments output for the onboard instruments such as the Multi-Function Display MFD and Up Front Control Panel UFCP for example. The mission computer MC has a graphics card dedicated to drawing the onboard instruments such as the displays for the multi-function display MFD based on the instrument data ID.

The mission computer MC main board contains the operational flight program OFP that calculates the instrument data ID required for the onboard instruments. This instrument data ID is transferred to the graphics cards.

To reduce loading, the packets of the instrument data ID are only sent when their data content has changed. Each packet is otherwise only sent every few seconds to ensure subsequent playback synchronization is achieved rapidly during reconstruction.

The same instrument data ID can also be transferred to the mission data recorder MDR due to the underlying similarity in the data structure. Therefore at the same time as sending the instrument data ID to the graphics cards, the instrument data ID is sent to the mission data recorder MDR preferably as UDP packets over the Ethernet link.

A header is added to the mission data recorder MDR output that defines the instrument data ID contained within a packet. A small number of additional packets are included on the mission data recorder MDR output that use the same data architecture/structure but are not sent to the graphics cards. These are included to aid reconstruction of other systems other than the aircraft multi-function display MFD (e.g. Up-Front Control Panel UFCP or Primary Flight Display PFD).

### Mission data recorder

Fig. 2B shows a schematic block diagram depicting the integration of the mission data recorder MDR of the present invention with the avionics system of an aircraft.

The role of the mission data recorder MDR is to record instrument data ID to allow post flight mission analysis and debrief - to support the training of aircrew in the aircraft. In a preferred embodiment of the present invention, the mission data recorder MDR uses Ethernet input, video and audio inputs. The Ethernet input is from the mission computer MC, and carries the data used to generate the onboard instruments such as the multi-function display MFD displays. The video shows head-up display HUD symbology overlaid on a forward view of the outside world.

The mission data recorder MDR is further connected to the audio management unit AMU which controls all audio signals within the aircraft.

In a two-cockpit training aircraft, the head-up display HUD is installed in the front cockpit position, and incorporates a forward-looking camera. This camera produces a video image of the view ahead of the aircraft for display on the rear seat head-up display repeater HUDR. The head-up display HUD symbology is superimposed over the image of the outside world on the head-up display repeater HUDR. In this case, the video is of the video seen on a head-up display repeater HUDR, and shows head-up display HUD symbology overlaid on a forward view of the outside world. In this two-cockpit training aircraft, the audio is of the front cockpit headset audio so that all radio and intercom traffic and alert tones are available.

Additional event data, generated by the pilot via additional controls of the aircraft such as a console mounted event button or a stick mounted trigger and pickle buttons, are also recorded by the mission data recorder MDR

In a preferred embodiment, the mission computer MC transmits, via UDP broadcast on the Ethernet ports 6003 (display data and instrumentation) and 6005 (Radar picture). This is the instrument data ID that is used for the generation of the onboard instruments such as multi-function display MFD display graphics. Some additional data that is available in the mission computer MC and used on further onboard instruments such as the primary flight display PFD is also transmitted on the Ethernet bus.

The mission data recorder MDR receives this UDP data, and records it. The mission data recorder MDR does not make any attempt to decode the UDP port 6003/6005 broadcast data. The resultant UDP contents are preferably stored on a removable memory module RMM.

In a preferred implementation, the instrument data ID is stored on the removable memory module RMM in files that are nominally 30 MB in size - this equates to approximately 5 to 6 minutes of recording time. Individual file sizes are limited so that if a file should become corrupted then only 5 to 6 minutes of data are lost.

Time stamp information is embedded within the recording, such that at replay/ reconstruction the actual time of the recording can be determined, for cross-relation to other external events and also to allow synchronized replay with the video and events data (and recordings from other aircraft).

Preferably, the video and audio data are combined into a single recording stream. The audio is added to the video (left and right channels) to become a standard video with stereo audio channels. The audio/video is compressed for example using MPEG-2 compression, at 720 by 480 pixels image size and 60 frames per second. The resultant MPEG digital data is stored on the removable memory module RMM.
The data is recorded in files that are 30 seconds in length - these are approximately 30 MB is size. The individual file sizes are limited so that if a file should become corrupted then only 30 seconds of video are lost.

Time stamp information is embedded within the recording, such that at replay the actual time of the recording can be determined, for cross-relation to other external events and also to allow synchronised replay with the head-down Ethernet recorded data and events data (and recordings from other aircraft).

When the aircrew actuates an additional control of the aircraft such as pressing the event button, trigger or pickle button in either the front or rear cockpits of a two-cockpit training aircraft, the mission computer MC detects this. The mission computer MC then passes a UDP packet to the mission data recorder MDR with the event source code. The mission data recorder MDR records the time and event type.

In the replay/reconstruction, the event types and times can be listed. The time the event was made can be jumped to (offset by a defined amount, e.g., 5 seconds before the event was made) and the replay (video and/or head-down) played from that point.

The removable memory module RMM operates as a conventional storage, with files stored within folders. Usually the removable memory module RMM is removed/replaced for each flight.

In a preferred implementation there are 6 folders on the removable memory module RMM:
- Channel1
   Within Channel1 are sub-folders that are created at the start of each recording session (power-up). These sub-folders then hold the video recording files for that recording session.
- ENet
   Within ENet are the Ethernet head-down recording files and log files for all the recording sessions.
- Events
   Within Events is a file for each recording session. Each file contains any event data recorded for that session.
- Logs
   Within Logs is a file for each recording session; each file contains log information for the video recording of that session.
- Mission
   The Mission folder is relevant to data upload.
- MAP (may be renamed according to the ground planning and mission computer MC configurations).
   The MAP folder is relevant to data upload.

### Mission debriefing system

The mission debriefing system MDS is designed to facilitate training by assisting the instructor to reinforce key learning points from the training sortie. It also provides a reliable indication of student performance on solo sorties.

In the preferred implementation, the mission debriefing system MDS reads the Channel 1, ENet and Events folder of the removable memory module RMM to retrieve information as described above.

Means for receiving said removable memory module RMM are provided within the mission debriefing system MDS, such as a memory card slot or suitable connectors.

The video information is replayed to give a combined head-up display HUD/outside world picture. This information cannot be stored solely in instrument data ID due to the inclusion of the outside world picture that cannot faithfully be reproduced.

The mission debriefing system MDS displays/regenerates for example the following onboard instruments based on instrument data ID:
- Up-Front Control Panel (UFCP);
- Left Multi Function Display (LMFD);
- Primary Flight Display (PFD); and
- Right Multi Function Display (RMFD).

Mission debriefing system MDS regenerates onboard instruments of the aircraft as per the instrument data ID recorded on the removable memory module RMM during the mission. The mission debriefing system MDS allows the user to regenerate any recorded multi-function display MFD page even if it was not actually selected for display during the mission (i.e. selected by the pilot during flight) as all instrumentation is recorded regardless of display selected.

These additional displays are available at very little overhead compared to recording the additional 20-30 video streams that would traditionally be required under such a debriefing system.

The Events information is used to highlight within the replay / reconstruction where certain events occurred. Events of interest to a debrief scenario may then be used to quickly navigate through the mission.

In a further embodiment of the present invention, the mission debriefing system MDS is connectable to said mission data recorder MDR for retrieving said recorded instrument data ID and subsequently reproduce the onboard instruments of the aircraft based on instrument data ID retrieved from the mission data recorder MDR, said reproduction being performed within the aircraft using the onboard instruments of the aircraft. This has the advantage that since the reconstruction is performed within the aircraft, the environment thus reconstructed will be a true reconstruction of the environment during flight.

In an even further embodiment of the present invention, the mission debriefing system MDS is connectable to a mission data recorder MDR for retrieving said recorded instrument data ID and subsequently reproduce the onboard instruments of the aircraft based on instrument data ID retrieved from the mission data recorder MDR, said reproduction being performed within a simulator comprising a mission computer MC corresponding to said simulator replicating the onboard instruments of the aircraft. This has the advantage that since the reconstruction is performed within a simulator replicating the aircraft, the environment thus reconstructed will be a true reconstruction of the environment during flight without occupying an aircraft.

It will be understood that many variations could be adopted based on the specific structure hereinbefore described without departing from the scope of the invention as defined in the following claims.

**REFERENCE LIST:**

| | |
|---|---|
| mission debriefing system | MDS |
| operational flight program | OFP |
| mission data recorder | MDR |
| removable memory module | RMM |
| mission computer | MC |
| audio management unit | AMU |
| instrument data | ID |
| multi-function display | MFD |
| primary flight display | PFD |
| head-up display | HUD |
| head-up display repeater | HUDR |
| | |
| recording and replay system | 100 |
| mission bus | 11 |

## Claims

1. Digital recording and replay system (100) for an aircraft, comprising:
- a Mission Computer (MC) with an Operational Flight Program (OFP) for digital signal processing of input source signals and generating instrument data (ID) for onboard instruments of the aircraft;
- a Mission Data Recorder (MDR) connected to said Mission Computer (MC) for recording said instrument data (ID); and
- a Mission Debriefing System (MDS);
wherein the Mission Debriefing System (MDS) is configured to reproduce the onboard instruments of the aircraft based on instrument data (ID) retrieved from the Mission Data Recorder (MDR).

2. Digital recording and replay system (100) for an aircraft according to claim 1,
**characterized in that** the Mission Data Recorder (MDR) comprises means to receive a Removable Memory Module (RMM) for storing said instrument data (ID) recorded.

3. Digital recording and replay system (100) for an aircraft according to claim 2,
**characterized in that** the Removable Memory Module (RMM) is removable from said means to receive of the Mission Data Recorder (MDR) and insertable into corresponding means for receiving of the Mission Debriefing System (MDS).

4. Digital recording and replay system (100) for an aircraft according to claim 1,
**characterized in that** the Mission Debriefing System (MDS) is connectable to said Mission Data Recorder (MDR) for retrieving said recorded instrument data (ID) and subsequently reproduce the onboard instruments of the aircraft based on instrument data (ID) retrieved from the Mission Data Recorder (MDR), said reproduction being performed within the aircraft using onboard instruments of the aircraft.

5. Digital recording and replay system (100) for an aircraft according to one of the preceding claims 1 to 4, **characterized in that** said instrument data (ID) comprises parameters of the avionics system and wherein said reproduction comprises the reconstruction of a display as a pilot would see it during a flight of the aircraft during which said instrument data (ID) has been recorded.

6. Digital recording and replay system (100) for an aircraft according to one of the preceding claims 1 to 4, **characterized in that** said instrument data (ID) comprises input data transferred to a graphics card driving a display of the aircraft.

7. Digital recording and replay system (100) for an aircraft according to claim 6,
**characterized in that** said input data is sent as packets to the Mission Data Recorder (MDR) to be recorded.

8. Digital recording and replay system (100) for an aircraft according to claim 7,
**characterized in that** a header is added to said packets of input data sent to the Mission Data Recorder (MDR), said header defining the data contained within the packet.

9. Digital recording and replay system (100) for an aircraft according to claim 7 or 8, **characterized in that** additional packets are sent to the Mission Data Recorder (MDR) in addition to the packets of input data sent to the graphics card driving a display, said additional packets provided for aiding the reconstruction of additional aircraft avionics systems other than said display.

10. Digital recording and replay system (100) for an aircraft according to one of the preceding claims 1 to 9, **characterized in that** said instrument data (ID) comprises additional event data generated in reaction to pilot actions.

11. Digital recording and replay system (100) for an aircraft according to claim 10, **characterized in that** said additional event data is generated via onboard controls of the aircraft.

12. Method for reproduction of onboard instrumentation of an aircraft, comprising the steps of:
- connecting a Mission Data Recorder (MDR) to a Mission Computer (MC) of an aircraft having an Operational Flight Program (OFP) for generating instrument data (ID) for onboard instruments of the aircraft;
- recording instrument data (ID) sent by the Mission Computer (MC) to the onboard instruments of the aircraft using said Mission Data Recorder (MDR);
- providing a Mission Debrief System (MDS); and
- causing said Mission Debrief System (MDS) to reproduce the onboard instruments of the aircraft based on instrument data (ID) retrieved from the Mission Data Recorder (MDR).

13. Method for reproduction of onboard instrumentation of an aircraft according to claim 12, **characterized in that** it comprises the step of providing a Removable Memory Module (RMM) into means to receive of the Mission Data Recorder (MDR) for storing said instrument data (ID) recorded.

14. Method for reproduction of onboard instrumentation of an aircraft according to claim 13, **characterized in that** it further comprises the steps of:
- removing the Removable Memory Module (RMM) from said means to receive of the Mission Data Recorder (MDR); and
- inserting the Removable Memory Module (RMM) into corresponding means for receiving of the Mission Debriefing System (MDS).

15. Method for reproduction of onboard instrumentation of an aircraft according to claim 12, **characterized in that** it further comprises the step of connecting the Mission Debriefing System (MDS) to the Mission Data Recorder (MDR) for retrieving said recorded instrument data (ID), wherein said reproduction of onboard instruments of the aircraft based on instrument data (ID) retrieved from the Mission Data Recorder (MDR) is performed within the aircraft using onboard instruments of the aircraft.

## Patentansprüche

1. Digitales Aufzeichnungs- und Wiedergabesystem (100) für ein Flugzeug, umfassend:
- einen Missions-Computer (MC) mit einem Operationellen Flugprogramm (OFP) für digitale Signalverarbeitung von Eingangs-Quell-Signalen und Generierung von Instrumentendaten (ID) für Bordinstrumente des Flugzeugs;
- einen Missions-Datenrekorder (MDR), welcher zum Aufzeichnen der Instrumentendaten (ID) an den Missions-Computer (MC) angeschlossen ist; und
- ein Missions-Debriefingsystem (MDS);
wobei das Missions-Debriefingsystem (MDS) konfiguriert ist, um die Bordinstrumente des Flugzeugs basierend auf vom Missions-Datenrekorder (MDR) abgerufenen Instrumentendaten (ID) zu reproduzieren.

2. Digitales Aufzeichnungs- und Wiedergabesystem (100) für ein Flugzeug nach Anspruch 1, **dadurch gekennzeichnet, dass** der Missions-Datenrekorder (MDR) eine Vorrichtung zur Aufnahme eines Wechselspeichermoduls (RMM) zum Speichern der aufgezeichneten Instrumentendaten (ID) umfasst.

3. Digitales Aufzeichnungs- und Wiedergabesystem (100) für ein Flugzeug nach Anspruch 2, **dadurch gekennzeichnet, dass** das Wechselspeichermodul (RMM) geeignet ist, von der Vorrichtung zur Aufnahme des Missions-Datenrekorders (MDR) entfernt zu werden und in eine entsprechende Aufnahmevorrichtung des Missions-Debriefingsystems (MDS) eingesteckt zu werden.

4. Digitales Aufzeichnungs- und Wiedergabesystem (100) für ein Flugzeug nach Anspruch 1, **dadurch gekennzeichnet, dass** das Missions-Debriefingsystem (MDS) an den Missions-Datenrekorder (MDR) anschliessbar ist, um die aufgezeichneten Instrumentendaten (ID) abzurufen und anschliessend die Bordinstrumente des Flugzeugs basierend auf vom Missions-Datenrekorder (MDR) abgerufenen Instrumentendaten (ID) zu reproduzieren, wobei die Reproduktion unter Benutzung von Bordinstrumenten des Flugzeugs innerhalb des Flugzeugs ausgeführt wird.

5. Digitales Aufzeichnungs- und Wiedergabesystem (100) für ein Flugzeug nach einem der vorhergehenden Ansprüche 1 bis 4, **dadurch gekennzeichnet, dass** die Instrumentendaten (ID) Parameter des Avioniksystems umfassen und wobei die Reproduktion die Rekonstruktion eines Displays umfasst, wie es ein Pilot sehen würde während eines Flugs des Flugzeugs, während welches die Instrumentendaten (ID) aufgezeichnet wurden.

6. Digitales Aufzeichnungs- und Wiedergabesystem (100) für ein Flugzeug nach einem der vorhergehenden Ansprüche 1 bis 4, **dadurch gekennzeichnet, dass** die Instrumentendaten (ID) an eine ein Display des Flugzeugs betreibende Grafikkarte transferierte Eingangsdaten umfassen.

7. Digitales Aufzeichnungs- und Wiedergabesystem (100) für ein Flugzeug nach Anspruch 6, **dadurch gekennzeichnet, dass** die Eingangsdaten als Pakete an den Missions-Datenrekorder (MDR) gesendet werden, um aufgezeichnet zu werden.

8. Digitales Aufzeichnungs- und Wiedergabesystem (100) für ein Flugzeug nach Anspruch 7, **dadurch gekennzeichnet, dass** ein Dateikopf zu den an den Missions-Datenrekorder (MDR) gesendeten Eingangsdaten-Paketen hinzugefügt wird, wobei der Dateikopf die innerhalb des Pakets enthaltenen Daten bezeichnet.

9. Digitales Aufzeichnungs- und Wiedergabesystem (100) für ein Flugzeug nach Anspruch 7 oder 8, **dadurch gekennzeichnet, dass** zusätzlich zu den an die ein Display betreibende Grafikkarte gesendeten Eingangsdaten-Paketen zusätzliche Pakete an den Missions-Datenrekorder (MDR) gesendet werden, wobei die besagten zusätzlichen Pakete dazu dienen, die Rekonstruktion von zusätzlichen, von dem Display verschiedenen, Flugzeug-Avioniksystemen zu unterstützen.

10. Digitales Aufzeichnungs- und Wiedergabesystem (100) für ein Flugzeug nach einem der vorhergehenden Ansprüche 1 bis 9, **dadurch gekennzeichnet, dass** die Instrumentendaten (ID) zusätzliche, als Reaktion auf Pilotenhandlungen generierte Ereignisdaten umfassen.

11. Digitales Aufzeichnungs- und Wiedergabesystem (100) für ein Flugzeug nach Anspruch 10, **dadurch gekennzeichnet, dass** die zusätzlichen Ereignisdaten über Bord-Bedienelemente des Flugzeugs generiert werden.

12. Verfahren zur Reproduktion von Bordinstrumenten eines Flugzeugs, umfassend die Schritte:
- Anschliessen eines Missions-Datenrekorders (MDR) an einen Missions-Computer (MC) eines Flugzeugs mit einem Operationellen Flugprogramm (OFP) für Generierung von Instrumentendaten (ID) für Bordinstrumente des Flugzeugs,
- Aufzeichnen von vom Missions-Computer (MC) an die Bordinstrumente des Flugzeugs gesendeten Instrumentendaten (ID) unter Benutzung des Missions-Datenrekorders (MDR):
- Bereitstellen eines Missions-Debriefingsystems (MDS); und
- Veranlassen des Missions-Debriefingsystems (MDS) zur Reproduktion der Bordinstrumente des Flugzeugs basierend auf vom Missions-Datenrekorder (MDR) abgerufenen Instrumentendaten (ID).

13. Verfahren zur Reproduktion von Bordinstrumenten eines Flugzeugs nach Anspruch 12, **dadurch gekennzeichnet, dass** es einen Schritt der Bereitstellung eines Wechselspeichermoduls (RMM) in eine Aufnahmevorrichtung des Missions-Datenrekorders (MDR) umfasst, zum Speichern der aufgezeichneten Instrumentendaten (ID).

14. Verfahren zur Reproduktion von Bordinstrumenten eines Flugzeugs nach Anspruch 13, **dadurch gekennzeichnet, dass** es ferner die Schritte umfasst:
- Entfernen des Wechselspeichermoduls (RMM) aus der Aufnahmevorrichtung des Missions-Datenrekorders (MDR); und
- Einstecken des Wechselspeichermoduls (RMM) in eine entsprechende Aufnahmevorrichtung des Missions-Debriefingsystems (MDS).

15. Verfahren zur Reproduktion von Bordinstrumenten eines Flugzeugs nach Anspruch 12, **dadurch gekennzeichnet, dass** es ferner einen Schritt des Anschliessens des Missions-Debriefingsystems (MDS) an den Missions-Datenrekorder (MDR) zum Abrufen der aufgezeichneten Instrumentendaten (ID) umfasst, wobei die Reproduktion der Bordinstrumente des Flugzeugs basierend auf vom Missions-Datenrekorder (MDR) abgerufenen Instrumentendaten (ID) innerhalb des Flugzeugs unter Benutzung von Bordinstrumenten des Flugzeugs ausgeführt wird.

## Revendications

1. Système d'enregistrement et de lecture numérique (100) pour un aéronef, comprenant:
- un ordinateur de mission (MC) avec un programme de vol opérationnel (OFP) pour le traitement de signaux numériques de signaux sources d'entrée et pour générer des données d'instrument (ID) pour des instruments embarqués de l'aéronef;
- un enregistreur de données de mission (MDR) connecté audit ordinateur de mission (MC) pour enregistrer lesdites données d'instrument (ID); et
- un système de débriefing de mission (MDS);
dans lequel le système de débriefing de mission (MDS) est configuré pour reproduire les instruments embarqués de l'aéronef sur la base de données d'instrument (ID) extraites de l'enregistreur de données de mission (MDR).

2. Système d'enregistrement et de lecture numérique (100) pour un aéronef selon la revendication 1, **caractérisé en ce que** l'enregistreur de données de mission (MDR) comprend un moyen de réception d'un module de mémoire amovible (RMM) pour stocker lesdites données d'instrument (ID) enregistrées.

3. Système d'enregistrement et de lecture numérique (100) pour un aéronef selon la revendication 2, **caractérisé en ce que** le module de mémoire amovible (RMM) est susceptible d'être détaché dudit moyen de réception de l'enregistreur de données de mission (MDR) et susceptible d'être inséré dans un moyen correspondant de réception du système de débriefing de mission (MDS).

4. Système d'enregistrement et de lecture numérique (100) pour un aéronef selon la revendication 1, **caractérisé en ce que** le système de débriefing de mission (MDS) est susceptible d'être connecté audit enregistreur de données de mission (MDR) pour récupérer lesdites données d'instrument (ID) enregistrées et par la suite reproduire les instruments embarqués de l'aéronef sur la base de données d'instrument (ID) récupérées de l'enregistreur de données de mission (MDR), ladite reproduction étant effectuée dans l'aéronef à l'aide d'instruments embarqués de l'aéronef.

5. Système d'enregistrement et de lecture numérique (100) pour un aéronef selon l'une quelconque des revendications précédentes 1 à 4, **caractérisé en ce que** lesdites données d'instrument (ID) comprennent des paramètres du système d'avionique et dans lequel ladite reproduction comprend la reconstruction d'un affichage tel qu'un pilote le verrait lors d'un vol de l'aéronef au cours duquel lesdits données d'instrument (ID) ont été enregistrées.

6. Système d'enregistrement et de lecture numérique (100) pour un aéronef selon l'une quelconque des revendications précédentes 1 à 4, **caractérisé en ce que** lesdites données d'instrument (ID) comprennent des données d'entrée transférées sur une carte graphique entraînant un affichage de l'aéronef.

7. Système d'enregistrement et de lecture numérique (100) pour un aéronef selon la revendication 6, **caractérisé en ce que** lesdites données d'entrée sont envoyées sous forme de paquets à l'enregistreur de données de mission (MDR) pour être enregistrées.

8. Système d'enregistrement et de lecture numérique (100) pour un aéronef selon la revendication 7, **caractérisé en ce qu'**un en-tête est ajouté auxdits paquets de données d'entrée envoyés à l'enregistreur de données de mission (MDR), ledit en-tête définissant les données contenues dans le paquet.

9. Système d'enregistrement et de lecture numérique (100) pour un aéronef selon la revendication 7 ou 8, **caractérisé en ce que** des paquets supplémentaires sont envoyés à l'enregistreur de données de mission (MDR) en plus des paquets de données d'entrée envoyés à la carte graphique entraînant un affichage, lesdits paquets supplémentaires étant prévus pour aider à la reconstruction de systèmes d'avionique d'aéronef supplémentaires autres que ledit affichage.

10. Système d'enregistrement et de lecture numérique (100) pour un aéronef selon l'une quelconque des revendications précédentes 1 à 9, **caractérisé en ce que** lesdites données d'instrument (ID) comprennent des données d'événement supplémentaires générées en réaction à des actions du pilote.

11. Système d'enregistrement et de lecture numérique (100) pour un aéronef selon la revendication 10, **caractérisé en ce que** lesdites données d'événement supplémentaires sont générées via des commandes embarquées de l'aéronef.

12. Procédé de reproduction d'instrumentation embarquée d'un aéronef, comprenant les étapes consistant à:
- connecter un enregistreur de données de mission (MDR) à un ordinateur de mission (MC) d'un aéronef ayant un programme de vol opérationnel (OFP) pour générer des données d'instrument (ID) pour des instruments embarqués de l'aéronef;
- enregistrer des données de l'instrument (ID) envoyées par l'ordinateur de mission (MC) aux instruments embarqués de l'aéronef en utilisant ledit enregistreur de données de mission (MDR);
- fournir un système de débriefing de mission (MDS); et
- faire en sorte que ledit système de débriefing de mission (MDS) reproduise les instruments embarqués de l'aéronef sur la base de données d'instrument (ID) extraites de l'enregistreur de données de mission (MDR).

13. Procédé de reproduction d'instrumentation embarquée d'un aéronef selon la revendication 12, **caractérisé en ce qu'**il comprend l'étape consistant à fournir un module de mémoire amovible (RMM) dans des moyens de réception de l'enregistreur de données de mission (MDR) pour stocker lesdites données d'instrument (ID) enregistrées.

14. Procédé de reproduction d'instrumentation embarquée d'un aéronef selon la revendication 13, **caractérisé en ce qu'**il comprend en outre les étapes consistant à:
- enlever le module de mémoire amovible (RMM) desdits moyens de réception de l'enregistreur de données de mission (MDR); et
- insérer le module de mémoire amovible (RMM) dans des moyens correspondants pour réception du système de débriefing de la mission (MDS).

15. Procédé de reproduction d'instrumentation embarquée d'un aéronef selon la revendication 12, **caractérisé en ce qu'**il comprend en outre l'étape consistant à connecter le système de débriefing de mission (MDS) à l'enregistreur de données de mission (MDR) pour extraire lesdites données d'instrument (ID) enregistrées, dans lequel ladite reproduction des instruments embarqués de l'aéronef sur la base de données d'instrument (ID) extraites de l'enregistreur de données de mission (MDR) est effectuée dans l'aéronef à l'aide d'instruments embarqués de l'aéronef.
